Europäisches Patentamt

European Patent Office

Office européen des brevets

(11) Publication number: **0 357 278**
**A2**

# (12) EUROPEAN PATENT APPLICATION

(21) Application number: 89308211.5

(51) Int. Cl.⁵: **G05B 19/04**

(22) Date of filing: 14.08.89

(30) Priority: 29.08.88 US 237364

(43) Date of publication of application:
07.03.90 Bulletin 90/10

(84) Designated Contracting States:
DE ES FR GB IT SE

(71) Applicant: EATON CORPORATION
Eaton Center, 1111 Superior Avenue
Cleveland Ohio 44114(US)

(72) Inventor: Cote, William Francis
35144 Savannah Court
Farmington Hills Michigan 48331(US)

(74) Representative: Douglas, John Andrew
Eaton House Staines Road
Hounslow Middlesex TW4 5DX(GB)

(54) Versatile control system utilizing a microcontroller.

(57) A microcontroller-based control apparatus (2), which uses a main microcontroller (4) and utilizes its external bus (6) for connection to additional memory such as EPROM (8), EEPROM (16), RAM (12), or other, includes an Ancillary Circuit (20) on a single chip that performs bus-related functions in a variety of control applications. It has tri-statable address latches (22) for enabling an external programmer (30) to program EPROMs of the system. A very flexible Address Decoder (24) is capable of accommodating a great variety of memory maps (104). Devices of different bus widths can be mixed to form a control system, because bus width is controllably selectable during operation. A hybrid write-protection feature (26) for EEPROM provides differing protection levels and differing convenience of access within a single EEPROM. The Ancillary Circuit (20) permits convenient connection of a slave microcontroller (18).

FIG. 1

# VERSATILE CONTROL SYSTEM UTILIZING A MICROCONTROLLER

## BACKGROUND AND FIELD OF THE INVENTION

The invention relates to electronic control systems that utilize a microcontroller, (a limited-capability central processing unit contained on one semiconductor chip.) Electronic control systems that are based on microcontrollers and that utilize external memories and/or auxiliary "slave" microcontrollers often require the support of a number of ancillary circuits to perform functions related to the system bus. This invention includes an ancillary integrated circuit capable of performing these functions in a wide variety of applications of electronic control systems.

The example to be described as a preferred embodiment of the invention is a portion of an electronic control system for controlling an automated mechanical transmission (AMT), which is a mechanical transmission and clutch that are automated by the addition of an electronic control system and actuators such as pneumatic or electromechanical actuators.

## SUMMARY

The invention is a versatile multipurpose electronic control apparatus utilizing certain types of microcontrollers.

One object of the invention is to provide tri-statable address latches for enabling an external programmer to program Erasable Programmable Read-Only Memories (EPROMs) of the system that are external to a Main Microcontroller.

Another object is to provide a very flexible Address Decoder that is capable of accommodating a great variety of memory maps.

Another object is to provide flexible write Protection for Electrically Erasable Programmable Read-Only Memories (EEPROMs). The write protection reduces the risk that information in memory will be inadvertently erased by writing over it; differing compromises between protection and convenience are provided within a single EEPROM.

These and other objects are described in more detail below.

## BRIEF DESCRIPTION OF FIGURES

FIG. 1 shows a portion of a block diagram of the architecture of a microcontroller system for an AMT.

FIG. 2 shows another portion of the same architecture diagram. FIGS. 1 and 2 together represent one embodiment of many possible systems employing the invention.

FIG. 3 is a more detailed block diagram of the architecture of an Ancillary Circuit of the invention, an integrated circuit that is represented as a single block on FIG. 2.

FIG. 4 shows an Address Decoder portion of the invention.

FIG. 5 is a chip select map, which is related to the Address Decoder.

FIG. 6 depicts a Register Address Decoder, which is a portion of the Address Decoder.

## DESCRIPTION

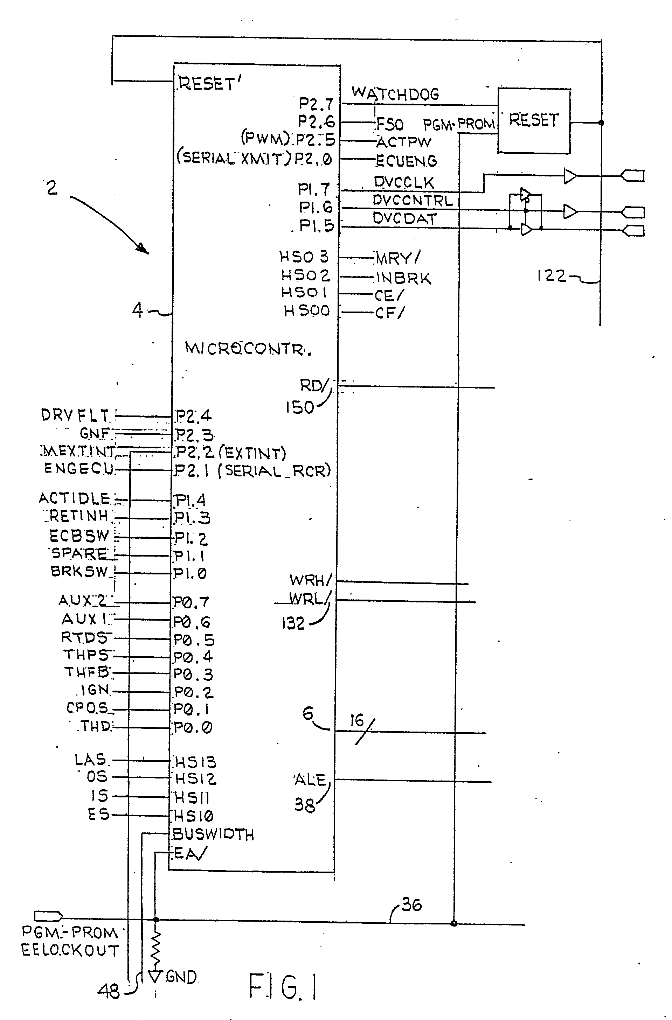

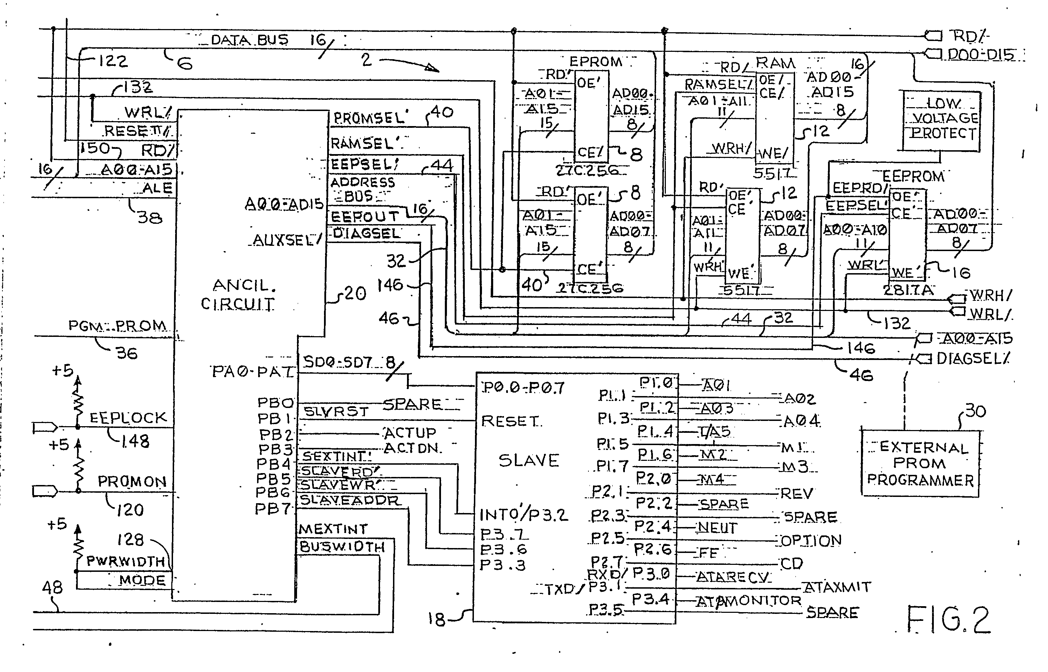

An electronic control unit for controlling an AMT is the preferred example of use of the invention. It is designated generally in FIGS. 1 and 2 by reference numeral 2. The disclosures of the following United b States Patents, which provide detailed information about the AMT environment, are incorporated herein by reference: No. 4,361,060; No. 4,551,802; No. 4,567,263; No. 4,702,127.

### Architecture

The electronic control unit 2 of the particular AMT embodiment being described utilizes a Main Microcontroller 4. model no. 8097BH, manufactured by Intel Corporation, of 3065 Bowers Avenue, Santa Clara, CA, 95051 (or similar microcontrollers). It has an external bus 6 for connection to additional memory such as external EPROM 8, RAM 12, and EEPROM 16, (with adjustable bus width), and for other I/O functions, including connection of a slave microcontroller 18 if desired.

The invention includes an Ancillary Circuit 20 on a single chip that performs bus-related functions in a wide variety of applications. Because of its versatility, the invented electronic control system is usable also as a standard building block for many applications other than control of an AMT. The Ancillary Circuit 20 eliminates various "glue" chips that are usually required for assembling a system and provides a simple means of attaching an optional slave microcontroller such as block 18. FIGS. 1 and 2 illustrate how this device 20 would be connected into a system having a slave microcontroller.

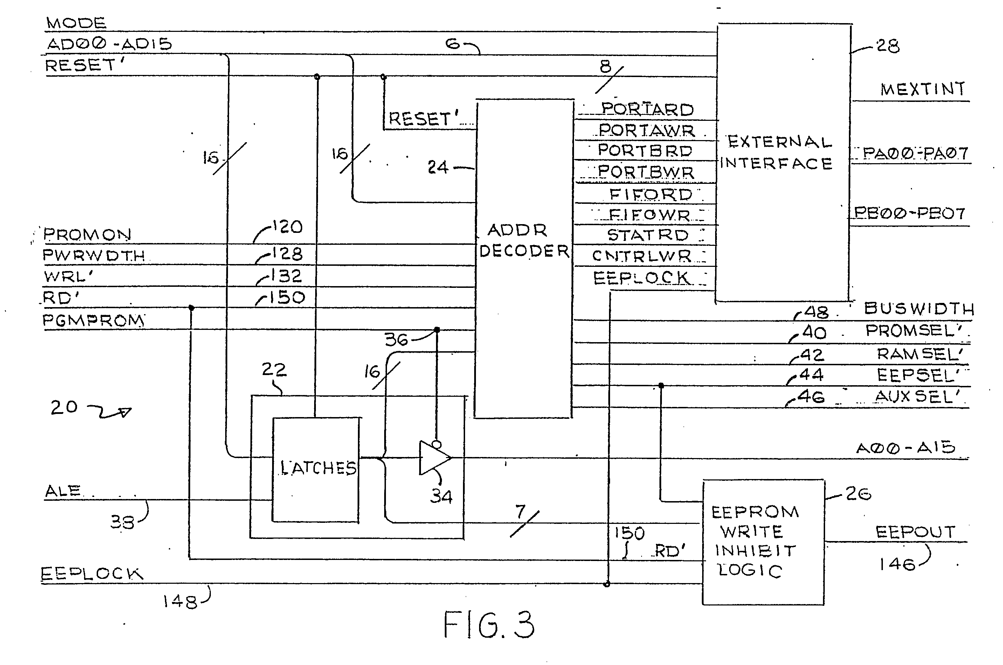

The Ancillary Circuit 20 has four functional blocks (FIG. 3), namely:

o Address Latches 22

o Address Decoder 24

o EEPROM Write Inhibit Logic 26

o External Interface Circuit 28.

These blocks are described separately below.

Tri-Statable Address Latches

The 8097BH microcontroller 4 has 16 time-multiplexed address and data lines for its system bus 6. The lines are used to transmit an address at the beginning of a bus cycle and data later in the same cycle. The multiplexing requires that latches 22 be provided to hold the addresses for the external memories 8, 12, 16, during the portion of each bus cycle in which the bus 6 is being used to transfer data, FIG. 3.

In some systems (including the AMT system being described), it is desirable to be able to program a program memory (EPROM 8) after it has been soldered into the circuit. This is accomplished by enabling the Main Microcontroller 4 to relinguish control to an External Prom Programmer 30 that can be attached to an address bus 32 of the Ancillary Circuit 20, FIG. 2. The procedure requires that the address latches 22 be tri-statable so that the External Prom Programmer 30 can take control of the address bus 32. Address latches 22 of this invention therefore include output drivers 34 (FIG. 3) capable of outputting three states, one of which has a high impedance that permits control of the address bus 32 to be driven by an external device.

The tri-statable drivers 34 are logic devices that are controlled by a PGMPROM signal at a terminal 36; their outputs are in the high impedance state when PGMPROM is high. When PGMPROM is low the drivers 34 function as amplifiers that transmit the outputs of the address latches 22 to the bus 32. The desired external characteristics of the drivers 34 can be achieved in any of many routine designs, for example, the PGMPROM signal can drive a series-connected semiconductor from conduction to cutoff. The tri-statable drivers 34 allow the EPROM 8 to be programmed without removing it from the circuit, so it is unnecessary to provide sockets for holding the EPROMs.

In order to allow the external memories 8, 12, 16, and other devices on the bus as much time as possible for decoding addresses, the address latches 22 are of a transparent type by which the address is made available to the external devices 8, etc. even before it is actually locked in at the latches 22. The latches 22 are open to receive addresses when an Address Latch Enable (ALE) signal at terminal 38 is high, and closed when it is low.

Address Decoder

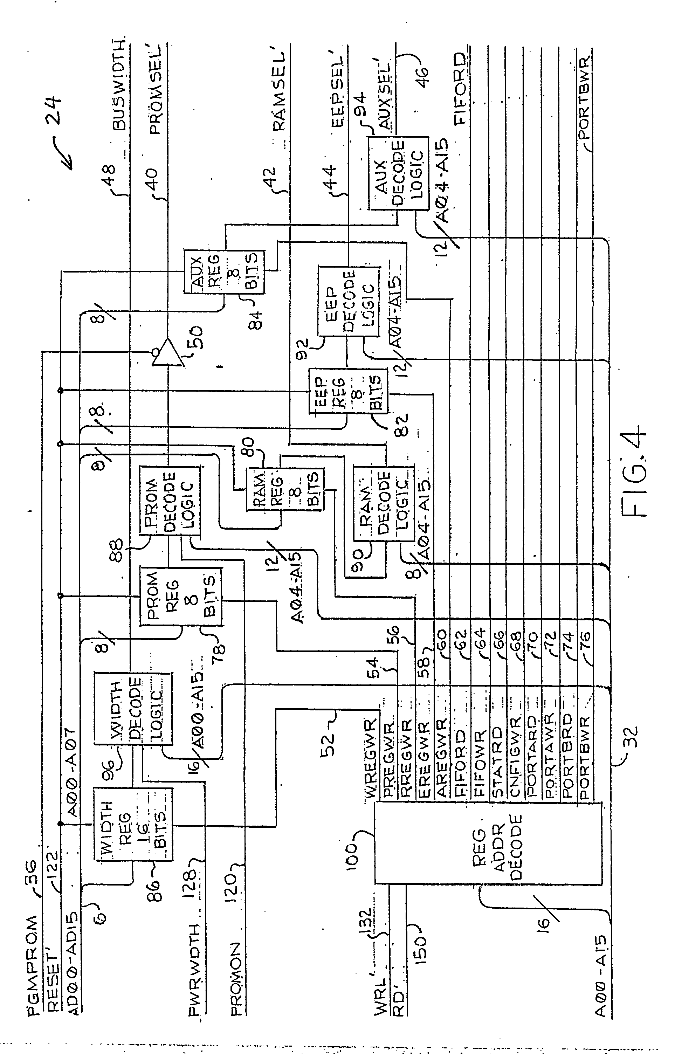

The requirement that this invention be usable in many different system configurations requires that the Address Decoder 24 be flexible enough to accommodate a variety of memory maps. (A memory map is a representation of the organization of memories, i.e., RAM, EPROM, EEPROM, I/O, within the address space of the processor.) Furthermore, the 8097BH microcontroller 4 is designed to accommodate both 8-bit-wide and 16-bit-wide devices 8, etc., simultaneously. In order to mix 8-bit and 16-bit devices on the same bus it is necessary to specify the bus width of the device at each memory location, e.g., the EPROM, (FIG. 4).

Signals for four address select lines 40, 42, 44, 46, and one bus width line 48 are generated within the Address Decoder and made available off chip, enabling control of a variety of devices that are external to the Main Microcontroller and to the Ancillary Circuit. These lines and their signals, which are discussed further in a section below entitled Externally Available Address Select And Buswidth Signals, are named:

PROMSEL' (40, which has a tri-statable output driver 50)

RAMSEL' (42)

EEPSEL' (44)

3

AUXSEL' (46)
BUSWIDTH (48).

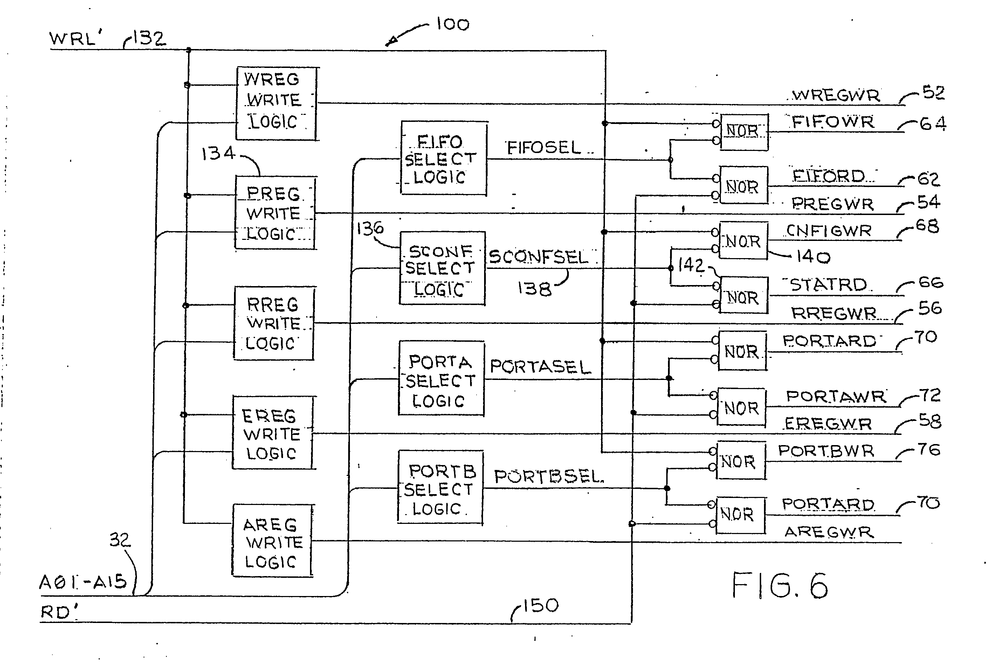

Additionally there are 13 register select lines generated within the Address Decoder 24 that are used internally for controlling access to registers contained on the Ancillary Circuit chip itself, FIGS. 4 and 6. These lines and their signals, which are discussed further in a section below entitled "Internal Register Select Lines", are named:

| WREGWR | Width register write | 52 |
|---|---|---|
| PREGWR | PROMsel register write | 54 |
| RREGWR | RAMsel register write | 56 |
| EREGWR | EEPROM register write | 58 |
| AREGWR | AUX register write | 60 |
| FIFORD | FIFO read | 62 |
| FIFOWR | FIFO write | 64 |
| STATRD | Status register read | 66 |
| CNFIGWR | Configuration register write | 68 |
| PORTARD | PORTA read | 70 |
| PORTAWR | PORTA write | 72 |
| PORTBRD | PORTB read | 74 |
| PORTAWR | PORTB write | 76 |

Externally Available Address Select and Buswidth Signals

The purpose of the externally accessible address select lines 40 etc. and the bus width signal at line 48 is to provide an ability to access memory configurations that are likely to be needed for various systems, without requiring additional small-scale and medium-scale integrated circuitry. Because this Ancillary Circuit is intended to be used in applications with as-yet-undefined memory maps, a capability has been provided for it to be dynamically configured in order to accommodate a variety of system requirements. This is done by providing internal registers 78, 80, 82, 84, in the Address Decoder 24 of the Ancillary Circuit 20, to receive and store the address information of bus 6, to which it responds by operating its four chip select lines 40, 42, 44, 46, respectively. See FIG. 4. Block 78 consists of eight D-type flip-flops with asynchronous clear (RESET). The flip-flops are clocked by the rising edge of the PREGWR signal.

Each of the registers 78, etc. is connected with a Decode Logic circuit; e.g., Prom Register 78 is connected with Prom Decode Logic circuit 88. When the Address Latches 22 contain an address mapped by the PROM register 78 to the EPROM, the Decode Logic circuit 88 recognizes it, and outputs a signal to its tri-statable driver (switch) 50, which, if not then preempted by a PGMPROM command 36, transmits the signal via the PROMSEL line 40 to the EPROM 8. A canonical sum of products form of the logic that is implemented in block 88 is expressed in the following equations:

PROMSEL = /(A13 * /A14 * /A15
+ /A13 * /A14 * A15 * PROMREG2
+ /A13 * A14 * /A15 * PROMREG1
+ /A13 * A14 * A15 * PROMREG4
+ A13 * /A14 * A15 * PROMREG3
+ A13 * A14 * /A15 * PROMREG2
+ /A12 * A13 * A14 * A15 * PROMREG5
+ A12 * /A13 * /A14 * /A15 * PROMREG0
+ /A11 * A12 * A13 * A14 * A15 * PROMREG6
+ /A04 * A11 * A12 * A13 * A14 * A15 * PROMREG7
+ /A05 * A11 * A12 * A13 * A14 * A15 * PROMREG7
+ /A06 * A11 * A12 * A13 * A14 * A15 * PROMREG7
+ /A07 * A11 * A12 . A13 * A14 * A15 * PROMREG7
+ /A08 * A11 * A12 * A13 * A14 * A15 * PROMREG7
+ /A09 * A11 * A12 * A13 * A14 * A15 * PROMREG7
+ /A10 * A11 * A12 * A13 * A14 * A15 * PROMREG7)

The driver 50 is similar to the drivers 34 which are described elsewhere herein. In the same way (except without line drivers such as driver 50), Registers 80, 82, and 84 are connected with RAM Decode, EEP Decode, and AUX Decode Logic circuits respectively, which provide output signals to the lines RAMSEL, EEPSEL, and AUXSEL respectively when one of those external devices is selected.

It is necessary to report to the Main Microcontroller 4 the width of the data bus (8 or 16 bits in the embodiment being described) of an external device at any given address. This is done via a Width Register 86 and a Width Decode Logic circuit 96, which specify the bus width of equipment corresponding to each of the memory spaces defined by the individual chip select lines 40, etc. The Width Register 86 receives address information on the bus 6 (FIG. 4), which is decoded in the Width Decode Logic circuit 96. The output of circuit 96 is the BUSWIDTH line 48. It is connected to an input terminal of the Main Microcontroller 4, as shown in FIGS. 1 and 2. The Width Register 86 can be programmed by means of a command on the WREGWR output line 52 of the Register Address Decoder 100.

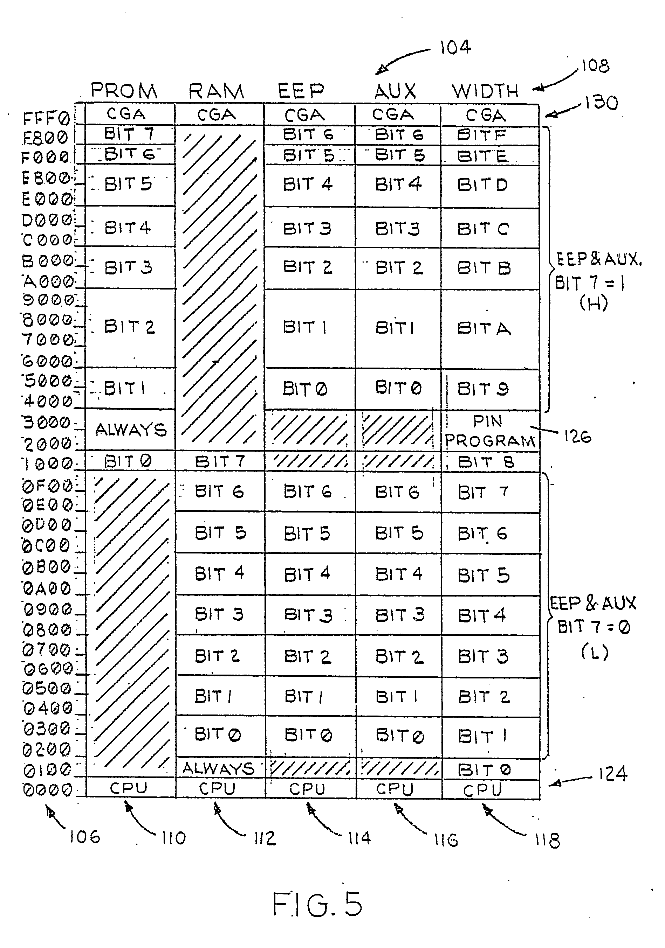

The memory map 104 of FIG. 5 depicts on its vertical axis 106 various memory regions of the 8097BH Main Microcontroller 4, and on its horizontal axis 108 each of the Select lines. An example is the line PROMSEL', 40. It is abbreviated in the heading of column 110 as PROM, and represents the EPROM, 8. Columns 112, 114, and 116 correspond to RAM, EEPROM, and AUX, respectively. The BUSWIDTH line 48 is represented on the map 104 by the last column 118. Each block within a column 110, 112, 114, 116 of the map represents a region within one of the external memories such as EPROM 8, to which a particular address from the Main Microcontroller 4 can be mapped. The register bit in the PROM register 78 that enables the mapping of each block is indicated in the block of column 110, and columns show similar bit numbers.

Each of these signals is described in detail below.

PROMSEL' - This signal is used for selecting the program memory chips EPROM, 8.

The 8097BH Main Microcontroller 4 uses address 2080H as its reset vector address and the addresses between 2000H and 200EH for its interrupt vectors. Therefore, it is necessary that it always be possible to access the EPROM at these locations regardless of the state of the configuration registers. Addresses between 2000H and 3FFFH always cause PROMSEL' to be driven true (low state). Any other addresses to be selected with this signal must be specified via the associated 8-bit PROMSEL register 78. The bits within this register are defined as follows:

| BIT | ADDRESS RANGE |
|---|---|
| 0 | 1000H - 1FFFH |
| 1 | 4000H - 5FFFH |
| 2 | 6000H - 9FFFH |
| 3 | A000H - BFFFH |
| 4 | C000H - DFFFH |
| 5 | E000H - EFFFH |
| 6 | F000H - F7FFH |
| 7 | F800H - FFEFH |

When a bit in the PROMSEL Register 78 is set, the presence on address bus 32 of one of the addresses associated with that bit causes the PROMSEL' line to be driven true.

When a system is under development or someone is attempting to isolate a fault, it may sometimes be desirable to execute different software than that which has been loaded into the system's program memory. That can easily be done by attaching a daughter board to the system, provided provisions have been made to permit access to the bus and to disable the on-board memory chips. This is accomplished by a PROMON input signal on line 120, FIG. 4. Under normal operations the PROMON signal is in the high state and the PROMSEL' signal, 40, operates as described above. When it is desired to run from an off-board memory, the PROMON signal 120 is pulled low, which causes the PROMSEL' signal 40 to remain false (high state).

The PROMSEL Register 78 is cleared to all zeros by driving the RESET' line 122 true (low state). The registers RAM (80), EEP (82), AUX (84), and WIDTH (86) are cleared in the same way.

Since external prom programming requires the EPROM 8 to be selected by an External Prom Programmer 30, it is necessary for the PROMSEL' signal 40 to be tri-statable. The PGMPROM signal at 36 is used to control the PROMSEL' tri-statable driver 50, FIG. 4. When PGMPROM 36 is high PROMSEL' 40 is switched to a high-impedance state.

RAMSEL' - This signal line 42 is used for selecting the scratch pad and variable data memory chips of the RAM 12.

The 8097BH contains 232 general-purpose registers located between addresses 18H - FFH. The spaces are denoted "CPU", in a row designated 124 of map 104. It is convenient for the user, therefore, for any additional random access memory to be placed directly above these registers in the system address space. Addresses between 0100H and 01FFH, column 112 of map 104, always cause the RAMSEL' line to be driven true (low state). Any other addresses selected by this RAMSEL' signal must be specified via the associated 8-bit RAMSEL Register 80.

When a bit in the RAMSEL Register 80 is set, as shown in column 112 of map 104, the presence on the latched address bus 32 of one of the addresses associated with that bit causes the RAMSEL' line 42 to be driven true.

EEPSEL' - This signal is used for selecting Electrically Erasable Programmable Read Only Memory 16, which is the parameter storage memory (EEPROM). In many real-time control applications there is a need for a quantity of memory for storing the basic configuration of the system being controlled, which can be infrequently modified by the end user. There is also a need for an area in which to copy certain data or calibrations that it is desired to maintain despite power outages. Both of these types are stored in the EEPROM 16. The EEPROM is selected by means of the EEPSEL' line 44, FIG. 4.

In order for the EEPSEL' line 44 to respond to desired memory addresses it is necessary to specify the address ranges via an associated 8-bit EEPSEL register, which is represented by block 82 of FIG. 4 and by column 114 of map 104. Bit 7 of the register 82 is a control bit that specifies the upper or lower half of the chip select map 104 of FIG. 5. When bit 7 is a logic 1, the other bits, zero to 6, are properly interpreted in accordance with the upper byte of the map. When bit 7 is a logic zero, those other bits are interpreted by the lower byte of the map.

The address bus 32 is connected to the EEP Decode Logic 92, to transmit address information A00 - A15. The address A00 - A15 on bus 32 is the output of the address latches 22; it is the same address as was originally transmitted by the Main Microcontroller 4 on its system bus 6. When a bit in the register 82 is set, the presence on address bus 32 of one of the addresses associated on the map with that bit causes the EEPSEL' line to be driven true (low state). As shown on FIG. 2, the bus 32 also transmits the address data A00 - A15 directly to the EPROM 8, the RAM 12, and the EEPROM 16.

AUXSEL' - The AUXSEL' line 46 is an auxiliary chip select line provided to accommodate systems that require additional devices on the bus 6.

In order for the AUXSEL' line 46 to respond to desired memory addresses it is necessary to specify the address ranges via the associated 8-bit AUXSEL register 84. Bit 7 of the register is a control bit that defines the interpretation of the remaining seven bits of the register, as was described above in relation to EEPROM'.

The bus 32 transmits address information from the Address Latches 22 to the AUX Decode Logic 94, which also receives information from the AUX Register 84. When a bit in the register 84 is set, the presence on bus 32 of one of the addresses associated (on the map 104) with that bit causes the AUXSEL' line 46 to be driven true (low state).

BUSWIDTH - This signal, on line 48 (FIGS. 2, 3, and 4), is used to inform the 8097BH Main Microcontroller 4 of the bus width (8 or 16 bits) of the device (e.g., RAM 12) that is at the selected address. The Main Microcontroller 4 uses this information to determine which of the data lines of bus 6 will contain the requested data and how to sequence accesses to 16-bit information.

Since the address range between 2000H and 3FFFH (area 126 of map 104), contains the reset vector, it is necessary that the function of the BUSWIDTH pin 48 (FIG. 4) in this region be pin-definable. The PWRWDTH pin 128, FIGS. 2, 3, and 4, defines the function of the BUSWIDTH pin 48 for this address range. If the PWRWDTH pin 128 is high, the BUSWIDTH pin 48 is high for these addresses; when the PWRWDTH pin is low, the BUSWIDTH pin is low for these addresses.

The function of the BUSWIDTH Pin 48 for addresses in all other regions of column 118 of the map 104 is specified by the associated bits within the 16 bit BUSWIDTH register 86 (FIG. 4) as defined below.

| BIT | ASSOCIATED ADDRESS RANGE |
|-----|--------------------------|
| 0 | 0100H - 01FFH |
| 1 | 0200H - 03FFH |
| 2 | 0400H - 05FFH |
| 3 | 0600H - 07FFH |
| 4 | 0800H - 09FFH |
| 5 | 0A00H - 0BFFH |
| 6 | 0C00H - 0DFFH |
| 7 | 0E00H - 0FFFH |
| 8 | 1000H - 1FFFH |
| 9 | 4000H - 5FFFH |
| A | 6000H - 9FFFH |
| B | A000H - BFFFH |
| C | C000H - DFFFH |
| D | E000H - EFFFH |
| E | F000H - F7FFH |
| F | F800H - FFEFH |

The WIDTH Decode 96 receives inputs from the Width Register 86, the PWRWDTH line 128, and the latched address bus 32, as shown on FIG. 4. When a bit in the Width Register 86 is set, the presence on bus 32 of one lb of the addresses associated with that bit causes the BUSWIDTH line 48 to be driven high by the WIDTH Decode Logic 96, indicating that a 16-bit-wide device is at that address.

The BUSWIDTH Register itself (86) is at address FFF4H. Because it is a 16-bit register, the BUSWIDTH signal at 48 responds high at that address. All other internal registers are 8 bits wide.

Internal Register Select Lines

The architecture of the Ancillary Circuit 20 requires that many of its internal registers be accessible by the 8097BH Main Microcontroller 4. The Address Decoder 24 of FIG. 4 contains the logic necessary to select each of these registers for read or write access as appropriate. A Register Address Decoder, block 100, performs the function. It is shown in more detail in FIG. 6.

Addresses between FFF0H and FFFFH are reserved for these internal registers, as indicated by the top row 130 of map 104. Characteristics of the internal registers are as follows.

| REGISTER | BITS | ADDRESS | ACCESS |
|----------|------|---------|--------|
| PROMSEL REGISTER | 8 BITS | FFF0H | WRITE ONLY |
| RAMSEL REGISTER | 8 BITS | FFF1H | WRITE ONLY |
| EEPSEL REGISTER | 8 BITS | FFF2H | WRITE ONLY |
| AUXSEL REGISTER | 8 BITS | FFF3H | WRITE ONLY |
| BUSWIDTH REGISTER | 16 BITS | FFF4H | WRITE ONLY |
| FIFO OUTPUT REGISTER | 8 BITS | FFF6H | WRITE ONLY |
| FIFO INPUT REGISTER | 8 BITS | FFF6H | READ ONLY |
| FIFO STATUS REGISTER | 8 BITS | FFF8H | READ ONLY |
| CONFIGURATION REGISTER | 8 BITS | FFF8H | WRITE ONLY |
| I/O PORTA | 8 BITS | FFFAH | READ/WRITE |
| I/O PORTB | 8 BITS | FFFCH | READ/WRITE |

As shown on FIG. 6, one input to the Register Address Decoder 100 is the WRL' line 132. It carries a write low byte control signal from the Main Microcontroller 4. A PREG Write Logic block 134 receives this signal; it controls the write-only PROMSEL Register 78 of FIG. 4. The PREG Write Logic also receives inputs from the latched address bus 32. If a WRL' signal occurs when the latched address bus 32 has the address FFF0H, the PREG Write Logic 134 outputs a PREGWR signal, which is conducted on line 54 to the PROMSEL Register 78. Other write-only logic circuits of the Register Address Decoder operate similarly.

The contents of block 134 are expressed by the following equations:

PREGWR = (/A00 * /A01 * /A02 * /A03 * A04 * A05 * A06 * A07 * A08 * A09 * A10 * A11 * A12 * A13 * A14 * A15 * /WRL) Each of the READ/WRITE logic circuits of FIG. 6 receives addresses from the bus 32 and outputs a signal to two NOR gates when it recognizes its own address.

Some of the registers share the same addresses. That is permissible because, where there is an overlap, one register is READ only and the other is WRITE only. Block 136, SCONF Select Logic, is typical. When it receives its own address, FFF8H, it outputs a signal on line 138 to two NOR gates 140, 142. The gate 140 has another input from WRL' line 132. Simultaneous occurrence of address FFF8H and a write signal WRL' cause NOR gate 140 to output a Configuration Write signal CNFIGWR on line 68 to the write-only Configuration Register (not shown).

NOR gate 142 receives a RD' read control signal on a line 150 from the Main Microcontroller 4. When that signal coincides with address FFF8H from bus 32, the NOR gate 142 outputs a STATRD signal on a line 66 to a read-only FIFO Status Register (not shown).


EEPROM Special Write Protection

An Electrically Erasable Programmable Read-Only Memory (EEPROM) in a control system offers the convenience of a non-volatile memory that can easily be modified by the operational software. However, because it can be modified so easily, a greater risk exists for the data in it to be corrupted by noise or by an errant microcontroller, which can be affected by electromagnetic interference or low system voltage.

Two types of information are stored in the EEPROM 16 of the embodiment being described. The first type is of application-specific parameters related to the configuration or values of the system being controlled, for example calibrations related to the wheel base of the truck, the engine, the number of gears in the transmission, etc. They may have to be entered only once or twice in the life of a system, for example when the system is tested before installation, and again later when it is installed in a particular truck.

The other type of information may have to be updated relatively frequently (e.g., once or more per day). This includes diagnostic fault table information and certain calibrations that can vary dynamically. It is desirable, therefore, for some of the EEPROM 16 to be conveniently available for write operations, while the remainder is protected from corruption due to unwanted write cycles that might occur during normal operation.

The invented system includes circuits that provide secure protection where required for the parametric information, at the same time that it is amenable to easy modification of data that must be up-dated more frequently. The problem is solved by controlling the output enable of the EEPROM 16 via an EEPOUT' signal, line 146, FIG. 3. EEPROMs are ordinarily designed so that it is impossible to write to them if their output enable is true. Therefore, if a mechanism is provided whereby the output enable is always pulled true when the EEPSEL' signal (the EEPROM select signal) is true for locations where it is known that writes should not be performed, a significant layer of protection has been added.

When a logic high signal is applied to an external pin EEPLOCK 148, write operations are inhibited from being performed on EEPROM locations below address FE00H. This is accomplished by continuously asserting an EEPROM output enable (EEPOUT' 146) signal whenever one of these addresses is decoded to the EEPSEL' line 44.

The ability to write to EEPROM addresses below FE00H depends upon the state of the EEPLOCK pin 148. If EEPLOCK is true (high state), any access to EEPROM 16 within these lower addresses causes the EEPOUT' signal 146 to be pulled true (low state) regardless of the state of the RD' signal (at 150) or the WRL' signal (at 132) from the Main Microcontroller 4.

The logic signal on pin 148 can be changed by means of an external jumper wire. If EEPLOCK 148 is false (grounded), then when such an access is made, EEPOUT' 146 is pulled true only if the read line RD' signal 150 is true (low state). Thus when the system is in the unprotected mode the output enable is on or off depending upon whether there is a read or write signal.

EEPROM located from FE00H to FFEFH is not protected and can always be written by a valid write cycle. Convenient but unprotected storage (in the upper addresses) is provided for data that must be modified frequently, and strong hardware protection is available in the lower addresses for infrequently modified data.

The state of the EEPLOCK pin 148 is readable by the Main Microcontroller via a status register.

A canonical sum of products form of the logic that is implemented in block 26 is expressed by the following equations:

EEPOUT = /(/A15 * EEPLOCK * /EEPSEL
+ /A14 * EEPLOCK * /EEPSEL
+ /A13 * EEPLOCK * /EEPSEL
+ /A12 * EEPLOCK * /EEPSEL
+ /A11 * EEPLOCK * /EEPSEL
+ /A10 * EEPLOCK * /EEPSEL
+ /A09 * EEPLOCK * /EEPSEL
+ /EEPSEL * /RD)

### Interprocessor Communication

Some control applications require more capability than is available from a particular single microcontroller. The 8097BH was designed principally to be a stand-alone microcontroller; consequently, it does not have control signals that would enable it to be integrated easily into systems requiring more than one microcontroller. Significant overhead would be incurred in accomplishing the necessary intercontroller communications with a slave, for example for synchronization.

The invented device provides a pair of First-In-First-Out (FIFO) memories to obviate the synchronization arrangements that are usually required when two microcontrollers communicate with each other. Each of these memories is one byte wide by 32 bytes deep. They are located in the External Interface 28, of FIG. 3. One can be written by the main 8097BH Main Microcontroller 4 and read by the slave microcontroller 18. The other can be written by the slave 18 and read by the Main Microcontroller 4. These FIFO memories have flexible interrupt capabilities so that either microcontroller can be interrupted by a variety of conditions occurring within the two FIFOs.

### Flexible Input/Output Ports

Two 8-bit ports that can be used independently as either input or output ports, are included on the Ancillary Circuit. They are called Port A and Port B. Twelve of the pins constituting each of these ports are multiplexed with an intercontroller communication interface (part of block 28, FIG. 3) between the slave microcontroller 18 and Main Microcontroller 4. The remaining four pins are always available for I/O activities.

### Signal Functions

The logical functions of various defined signals are in the table below, in which the column showing INPUT and/or OUTPUT refers to inputs and outputs of the Ancillary Circuit 20:

| | | |
|---|---|---|
| ADOO - AD15 | I/O | 8097BH address and data bus. |
| AOO - A15 | OUTPUT | Latched address bus. |
| PORTA | I/O | Multiplexed 8 bit I/O port and slave processor data bus. |
| PORTB | I/O | Multiplexed 8 bit I/O port and slave processor control interface. |
| ALE | INPUT | Address Latch Enable signal from the 8097BH processor. |
| RD' | INPUT | Read control signal from the 8097BH processor. |
| WRL' | INPUT | Write low byte control signal from the 8097BH processor. |
| PGMPROM | INPUT | Program Prom enable control signal. |
| EEPLOCK | INPUT | EEPROM write cycle lockout. |
| RESET' | INPUT | Main reset signal. |
| PWRWDTH | INPUT | Width of the program memory between addresses 2000H and 3FFFH. |

10

| MODE | INPUT | Operating mode definition for PORTA and PORTB signals. |
|---|---|---|
| PROMON | INPUT | PROMSEL' decode enable signal. |
| PROMSEL' | OUTPUT | PROM select line. |
| RAMSEL' | OUTPUT | RAM select line. |
| EEPSEL' | OUTPUT | EEPROM select line. |
| AUXSEL' | OUTPUT | AUXILIARY select line. |
| BUSWIDTH | OUTPUT | Bus Width processor control line. |
| EEPOUT | OUTPUT | EEPROM output enable control line. |
| MEXTINT | OUTPUT | Main processor (8096BH) external interrupt. |

Breadth

Wherever possible the foregoing disclosure is presented in the manner in which the inventive concepts can be most clearly explained, that is, by the use of block diagrams. Routine circuit details of logic gates, registers etc. that are common, well known, and ordinarily used by those familiar with this art are omitted for clarity. Although a particular embodiment is described to illustrate the invention, it should be understood that the inventive concepts are applicable to a great variety of control systems. For example, the invention is usable with or without a slave microcontroller. The invention is intended to be widely useful, as indicated by the scope of the claims.

## Claims

1. A control system comprising:
a microcontroller (4);
EPROM means (8) for storing a program, and having a bus (32);
tri-statable address latch means (22) receiving addresses (6) from said microcontroller (4) for communicating said addresses via two of its three selectable output states to said bus (32);
programmer means (30) external to said microcontroller (4) and connectable with said bus (32) for programming said EPROM means (8);
means for providing a command (36) for enabling said programmer means (30) to program said EPROM means (8);
said tri-statable address latch means (22) comprising switch means (34) receiving said command (36) for selecting a high-impedance third state of said three output states to permit said programmer means (30) to program said EPROM means (8).

2. A control system as in claim 1 and further comprising:
address decoder means (24) also receiving addresses (6) from said microcontroller (4), and including means (78, 88) responsive to said addresses for providing a selection signal to an EPROM selection line (40) for selecting said EPROM means for communication;
tri-statable driver means (50) receiving said command (36) and said selection signal, and responsive to said command to block said selection signal and present a high-impedance output to said EPROM selection line

11

(40).

3. In an electronic control unit for controlling an automatic manual transmission, a control system comprising:

a microcontroller (4);

EPROM means (8) for storing a program, and having a bus (32);

tri-statable address latch means (22) receiving addresses (6) from said microcontroller (4) for communicating said addresses via two of its three selectable output states to said bus (32);

programmer means (30) external to said microcontroller (4) and connectable with said bus (32) for programming said EPROM means (8);

means for providing a command (36) for enabling said programmer means (30) to program said EPROM means (8);

said tri-statable address latch means (22) comprising switch means (34) receiving said command (36) for selecting a high-impedance third state of said three output states to permit said programmer means (30) to program said EPROM means (8).

4. A control system comprising:

a microcontroller (4) for communicating selectively with a plurality of devices (8, etc.) external to the microcontroller by outputting and receiving information (6) including addresses and data, and capable of communicating information in a format having a bus width selected from at least two bus widths;

a plurality of devices (8, etc.) external to the microcontroller (4), each having a predetermined one of said bus widths;

address decoder means (24) receiving addresses from said microcontroller (4) and storing the addresses (78, etc.) for deriving therefrom information identifying the intended external devices;

said address decoder means comprising means (78, 80, 82, 84, 88, 90, 92, 94) for programmably storing any of a variety of memory maps;

bus width means (86, 96) comprised in said address decoder means (24), for storing information defining said predetermined bus width of each external device (8, etc.) and for communicating (48) to said microcontroller (4) the bus width of a selected external device to enable the microcontroller to communicate information in a format having the bus width of the selected external device.

5. In an electronic control unit for controlling an automatic manual transmission, a control system comprising:

a microcontroller (4) for communicating selectively with a plurality of devices (8, etc.) external to the microcontroller by outputting and receiving information (6) including addresses and data, and capable of communicating information in a format having a bus width selected from at least two bus widths;

a plurality of devices (8, etc.) external to the microcontroller (4), each having a predetermined one of said bus widths;

address decoder means (24) receiving addresses from said microcontroller (4) and storing the addresses (78, etc.) for deriving therefrom information identifying the intended external devices;

said address decoder means comprising means (78, 80, 82, 84, 88, 90, 92, 94) for programmably storing any of a variety of memory maps;

bus width means (86, 96) comprised in said address decoder means (24), for storing information defining said predetermined bus width of each external device (8, etc.) and for communicating (48) to said microcontroller (4) the bus width of a selected external device to enable the microcontroller to communicate information in a format having the bus width of the selected external device.

6. A control system comprising:

a microcontroller (4) capable of communicating information comprising data, addresses, and instructions (6, etc.) including read and write instructions (150, 132) for use by other devices (16, etc.);

EEPROM means (16) communicating with said microcontroller, and having both predetermined unprotectable address areas and predetermined electively-protectable address areas (104) for storing information;

address decoder means (24) communicating with said microcontroller (4) and said EEPROM means (16) for receiving addresses (6, 32) from said microcontroller and utilizing them (82, 92) to address said EEPROM means;

lock signal means (148) for electively providing a lock signal to protect and not protect said protectable address areas of said EEPROM means (16);

write inhibit logic means (26) for receiving at least said lock signal and address information, and, when a said protectable area of said EEPROM means is addressed, responding to said lock signal (148) to inhibit writing to said EEPROM means if said lock signal specifies protection, and responding to said lock signal not to inhibit writing if said lock signal does not specify protection.

7. A control system as in claim 6 and wherein said EEPROM means (16) comprises an output enable line (146) which, when its signal is true, enables EEPROM means output and prevents writing to the EEPROM means, and further comprising:

device selection means (82, 92) for providing a device selection signal (44) for selecting the EEPROM means in response to information from said microcontroller;

wherein said means for inhibiting writing (26) comprises means for, when said protectable area is addressed and said device selection signal (44) is true, pulling said output enable line (146) true if said lock signal specifies protection.

8. In an electronic control unit for controlling an automatic manual transmission, a control system comprising:

a microcontroller (4) capable of communicating information comprising data, addresses, and instructions (6, etc.) including read and write instructions (150, 132) for use by other devices (16, etc.);

EEPROM means (16) communicating with said microcontroller, and having both predetermined unprotectable address areas and predetermined electively-protectable address areas (104) for storing information;

address decoder means (24) communicating with said microcontroller (4) and said EEPROM means (16) for receiving addresses (6, 32) from said microcontroller and utilizing them (82, 92) to address said EEPROM means;

lock signal means (148) for electively providing a lock signal to protect and not protect said protectable address area of said EEPROM means (16);

write inhibit logic means (26) for receiving at least said lock signal and address information, and, when said protectable portion of said EEPROM means is addressed, responding to said lock signal (148) to inhibit writing to said EEPROM means if said lock signal specifies protection, and responding to said lock signal not to inhibit writing if said lock signal does not specify protection.

9. In an electronic control unit for controlling an automatic manual transmission, a control system comprising:

a microcontroller (4) capable of communicating information comprising data, addresses, and instructions (6, etc.) including read and write instructions (150, 132) for use by other devices (16, etc.);

EPROM means (8) for storing a program, and having a bus (32);

tri-statable address latch means (22) receiving addresses (6) from said microcontroller (4) for communicating said addresses via two of its three selectable output states to said bus (32);

programmer means (30) external to said microcontroller (4) and connectable with said bus (32) for programming said EPROM means (8);

means for providing a command (36) for enabling said programmer means (30) to program said EPROM (8);

said tri-statable address latch means (22) comprising switch means (34) receiving said command (36) for selecting a high-impedance third state of said three output states to permit said programmer means (30) to program said EPROM (8);

EEPROM means (16) communicating with said microcontroller, and having both predetermined unprotectable address areas and predetermined electively-protectable address areas (104) for storing information;

address decoder means (24) communicating with said microcontroller (4) and said EEPROM means (16) for receiving addresses (6, 32) from said microcontroller and utilizing them (82, 92) to address said EEPROM means;

lock signal means (148) for electively providing a lock signal to protect and not protect said protectable address area of said EEPROM means (16);

write inhibit logic means (26) for receiving at least said lock signal and address information, and, when said protectable portion of said EEPROM means is addressed, responding to said lock signal (148) to inhibit writing to said EEPROM means if said lock signal specifies protection, and responding to said lock signal not to inhibit writing if said lock signal does not specify protection.

10. In an electronic control unit for controlling an automatic manual transmission, a control system comprising:

a microcontroller (4) for communicating selectively with a plurality of devices (8, etc.) external to the microcontroller by outputting and receiving information (6) including addresses and data, and capable of communicating information in a format having a bus width selected from at least two bus widths;

a plurality of devices (8, etc.) external to the microcontroller (4), each having a predetermined one of said bus widths;

said plurality including EPROM means (8) for storing a program, and having a bus (32);

tri-statable address latch means (22) receiving addresses (6) from said microcontroller (4) for communicating said addresses via two of its three selectable output states to said bus (32);

programmer means (30) external to said microcontroller (4) and connectable with said bus (32) for

13

programming said EPROM means (8);

means for providing a command (36) for enabling said programmer means (30) to program said EPROM (8);

said tri-statable address latch means (22) comprising switch means (34) receiving said command (36) for selecting a high-impedance third state of said three output states to permit said programmer means (30) to program said EPROM (8);

address decoder means (24) receiving addresses from said microcontroller (4) and storing the addresses (78, etc.) for deriving therefrom information identifying the intended external devices;

said address decoder means comprising means (78, 80, 82, 84, 88, 90, 92, 94) for programmably storing any of a variety of memory maps;

bus width means (86, 96) comprised in said address decoder means (24), for storing information defining said predetermined bus width of each external device (8, 12, etc.) and for communicating (48) to said microcontroller (4) the bus width of a selected external device to enable the microcontroller to communicate information in a format having the bus width of the selected external device.

11. In an electronic control unit for controlling an automatic manual transmission, a control system comprising:

a microcontroller (4) capable of communicating information comprising data, addresses, and instructions (6, etc.) including read and write instructions (150, 132), selectively with a plurality of devices (8, 16, etc.) external to the microcontroller, said information being in a format having a bus width selected from at least two bus widths;

each of said plurality of devices having a predetermined one of said bus widths;

address decoder means (24) receiving addresses from said microcontroller (4) and storing the addresses (78, etc.) for deriving therefrom information identifying the intended external devices;

said address decoder means comprising means (78, 80, 82, 84, 88, 90, 92, 94) for programmably storing any of a variety of memory maps;

bus width means (86, 96) comprised in said address decoder means (24), for storing information defining said predetermined bus width of each external device (8, 12, etc.) and for communicating (48) to said microcontroller (4) the bus width of a selected external device to enable the microcontroller to communicate information in a format having the bus width of the selected external device;

EEPROM means (16) communicating with said microcontroller, and having both predetermined unprotectable address areas and predetermined electively-protectable address areas (104) for storing information;

said address decoder means (24) communicating with said microcontroller (4) and said EEPROM means (16) for receiving addresses (6, 32) from said microcontroller and utilizing them (82, 92) to address said EEPROM means;

lock signal means (148) for electively providing a lock signal to protect and not protect said protectable address area of said EEPROM means (16);

write inhibit logic means (26) for receiving at least said lock signal and address information, and, when said protectable portion of said EEPROM means is addressed, responsive to said lock signal (148) to inhibit writing to said EEPROM means if said lock signal specifies protection, and responsive to said lock signal not to inhibit writing if said lock signal does not specify protection.

FIG. 1

FIG. 2

FIG.3

FIG.4

104

108

130

| Addr | PROM | RAM | EEP | AUX | WIDTH | |
|---|---|---|---|---|---|---|
| FFF0 | CGA | CGA | CGA | CGA | CGA | |
| F800 | BIT 7 | | BIT 6 | BIT 6 | BITF | EEP & AUX. BIT 7 = 1 (H) |
| F000 | BIT 6 | | BIT 5 | BIT 5 | BITE | |
| E800 | BIT 5 | | BIT 4 | BIT 4 | BIT D | |
| E000 | | | | | | |
| D000 | BIT 4 | | BIT 3 | BIT 3 | BIT C | |
| C000 | | | | | | |
| B000 | BIT 3 | | BIT 2 | BIT 2 | BIT B | |
| A000 | | | | | | |
| 9000 | BIT 2 | | BIT 1 | BIT 1 | BIT A | |
| 8000 | | | | | | |
| 7000 | | | | | | |
| 6000 | | | | | | |
| 5000 | BIT 1 | | BIT 0 | BIT 0 | BIT 9 | |
| 4000 | | | | | | |
| 3000 | ALWAYS | | | | PIN PROGRAM | 126 |
| 2000 | | | | | | |
| 1000 | BIT 0 | BIT 7 | | | BIT 8 | |
| 0F00 | | BIT 6 | BIT 6 | BIT 6 | BIT 7 | EEP & AUX BIT 7 = 0 (L) |
| 0E00 | | | | | | |
| 0D00 | | BIT 5 | BIT 5 | BIT 5 | BIT 6 | |
| 0C00 | | | | | | |
| 0B00 | | BIT 4 | BIT 4 | BIT 4 | BIT 5 | |
| 0A00 | | | | | | |
| 0900 | | BIT 3 | BIT 3 | BIT 3 | BIT 4 | |
| 0800 | | | | | | |
| 0700 | | BIT 2 | BIT 2 | BIT 2 | BIT 3 | |
| 0600 | | | | | | |
| 0500 | | BIT 1 | BIT 1 | BIT 1 | BIT 2 | |
| 0400 | | | | | | |
| 0300 | | BIT 0 | BIT 0 | BIT 0 | BIT 1 | |
| 0200 | | | | | | |
| 0100 | | ALWAYS | | | BIT 0 | 124 |
| 0000 | CPU | CPU | CPU | CPU | CPU | |

106    110    112    114    116    118

FIG. 5

FIG. 6

EP 0 357 278 A2